## Europäisches Patentamt

## European Patent Office

## Office européen des brevets

(11) Veröffentlichungsnummer: **0 209 044**
**B1**

(12) EUROPÄISCHE PATENTSCHRIFT

(45) Veröffentlichungstag der Patentschrift:
29.11.89

(51) Int. Cl.⁴: **F01K 23/06, F02C 3/28**

(21) Anmeldenummer: 86109275.7

(22) Anmeldetag: 07.07.86

(54) Kombiniertes Gas- und Dampfturbinenkraftwerk.

(30) Priorität: 19.07.85 DE 3525893

(43) Veröffentlichungstag der Anmeldung:
21.01.87 Patentblatt 87/4

(45) Bekanntmachung des Hinweises auf die Patenterteilung:
29.11.89 Patentblatt 89/48

(84) Benannte Vertragsstaaten:
AT DE

(56) Entgegenhaltungen:
EP-A- 0 129 167
EP-A- 0 137 152
DE-A- 3 319 711
US-A- 4 288 979

Handbuchreihe Energie, Bd.7, "Gasturbinenkraftwerke, Kombikraftwerke, Heizkraftwerke und Industriekraftwerke", Herausgeber T. Bohn, Technischer Verlag Resch, München / Verlag TUEV Rheinland, Köln; 1984; Seiten 111-113

(73) Patentinhaber: Siemens Aktiengesellschaft,
Wittelsbacherplatz 2, D-8000 München 2(DE)

(72) Erfinder: Goebel, Konrad, Dipl.Ing., Stettiner Strasse 5,
D-8520 Erlangen(DE)
Erfinder: Tränkenschuh, Hans-Chris, Waldstrasse 6,
D-8550 Forchheim-Kersbach(DE)

ACTORUM AG

## Beschreibung

Die Erfindung bezieht sich auf ein kombiniertes Gas- und Dampfturbinenkraftwerk mit einem dem Gasturbinenteil vorgeschalteten Kohlevergaser, mit einer dem Kohlevergaser rohgasseitig nachgeschalteten Wärmetauscheranlage mit einem Hochdruckdampferzeuger, einem Rohgas-Reingas-Wärmetauscher und einem Niederdruckdampferzeuger, mit einer der Wärmetauscheranlage nachgeschalteten Gasreinigungsanlage, mit einer von der Gasreinigungsanlage zur Brennkammer der Gasturbine führenden Reingasleitung, mit einer vom Abgasstrom der Gasturbine durchströmten Abhitzedampferzeugeranlage mit einem Hochdruckdampferzeuger und mit einem an der Abhitzedampferzeugeranlage angeschlossenen Dampfturbinenkraftwerksteil.

Ein solches kombiniertes Gas- und Dampfturbinenkraftwerk ist durch die DE-A 3 319 711 bekannt. Bei diesem bekannten, kombinierten Gas- und Dampfturbinenkraftwerk wird das den Kohlevergaser verlassende heiße Rohgas vor der Einleitung in die Gasreinigungsanlage in einer Wärmetauscheranlage auf für die Gasreinigungsanlage verträgliche Temperaturen, etwa 100°C, abgekühlt. Die dabei freiwerdende Wärme wird im Hochdruckdampferzeuger der Wärmetauscheranlage zur Erzeugung von Hochdruckdampf, im Rohgas-Reingas-Wärmetauscher zur Wiederaufheizung des der Brennkammer der Gasturbine zuströmenden Reingases und in dem Niederdruck-Wärmetauscher zur Erzeugung von Niederdruckdampf verwendet. Der so erzeugte Hochdruckdampf und Niederdruckdampf wird bei diesem bekannten kombinierten Gas- und Dampfturbinenkraftwerk einer Hochdruckdampfturbine und Niederdruckdampfturbine zugeleitet. Darüber hinaus wird bei diesem bekannten Kraftwerk weiterer Hochdruckdampf in dem vom Abgasstrom der Gasturbine durchströmten Abhitzedampferzeuger erzeugt. Es ist ein besonderer Vorzug eines solchen Gas- und Dampfturbinenkraftwerks, daß seine Leistung in weiten Grenzen variiert werden kann. Selbst bei vollständigem Abschalten der Gasturbine und dem Aufhören der Dampferzeugung in dem der Gasturbine nachgeschalteten Abhitzedampferzeuger kann die Dampfturbine mit Hilfe des in der dem Kohlevergaser nachgeschalteten Wärmetauscheranlage erzeugten Dampfes – wenn auch mit verringerter Leistung – weiterbetrieben werden. Somit kann selbst in diesem extremen Fall noch der Eigenbedarf an elektrischer Leistung bei diesem kombinierten Gas- und Dampfturbinenkraftwerk über den von der Dampfturbine angetriebenen Generator gedeckt werden.

Durch die EP-A 129 167 ist auch ein Gas- und Dampfturbinenkraftwerk mit einem der Gas-Turbine vorgeschalteten Kohlevergaseranlage bekannt, bei der die den Niederdruckdampferzeuger bildende Heizfläche der Abhitzedampferzeugeranlage rauchgasseitig anderen, den Hochdruckdampferzeuger und dessen Speisewassererhitzer bildenden Heizflächen der Abhitzedampferzeugeranlage nachgeschaltet ist und eingangsseitig an einen Strang der Speisewasserleitung und ausgangsseitig über ein den anderen Heizflächen der Abhitzedampferzeugeranlage vorgeschaltete Überhitzerheizfläche an eine Niederdruckdampfeinspeisung der Dampfturbine angeschlossen ist. Bei diesem vorbekannten Dampf- und Gasturbinenkraftwerk werden in dem der Gasturbine nachgeschalteten Abhitzedampferzeuger entsprechend dessen Temperaturniveaus sowohl Hochdruck- als auch Niederdruckdampf erzeugt. Außerdem wird in der Kohlevergaseranlage anfallende Wärme dazu verwendet, sowohl Hochdruck- als auch Niederdruckdampf zu erzeugen. Sowohl das Hochdruck- als auch das Niederdruckdampfsystem der Abhitzedampferzeugeranlage einerseits als auch das Hochdruck- und Niederdruckdampfsystem der Kohlevergaseranlage andererseits sind so miteinander verkoppelt, daß nur ein gemeinsamer Betrieb der beiden möglich ist. Das ist einerseits dadurch vorgegeben, daß sowohl der Speisewasseranteil für das Hochdruck- als auch das Niederdrucksystem zwangsweise in seiner Gesamtheit durch den Niederdruck-Economizer der Niederdruck-Dampferzeugeranlage geleitet wird, als auch das gesamte, sowohl dem Niederdrucksystem als auch dem Hochdrucksystem der Kohlevergaseranlage zuzuführende Speisewasser durch diesen Niederdruck-Economizer der Abhitzedampferzeugeranlage geleitet wird. Andererseits wird auch der in der Kohlevergasungsanlage erzeugte Hochdruck- und Niederdruckdampf in die entsprechenden Dampftrommeln der Abhitzedampferzeugeranlage geleitet. Dies hat zur Folge, daß dieses Gas- und Dampfturbinenkraftwerk nur bei annähernd symmetrischer Leistung sowohl in der Kohlevergaseranlage als auch in der Gasturbine und Abhitzedampferzeugeranlage einigermaßen wirtschaftlich betrieben werden kann. Da ein Kohlevergaser jedoch nur in sehr begrenztem Ausmaß und dazu auch nur äußerst träge in seiner Leistung heruntergeregelt werden kann, eignet sich eine solche Kraftwerksanlage nicht für den Mittellastbetrieb, sondern allenfalls als Grundlastkraftwerk.

Der Erfindung liegt daher die Aufgabe zugrunde, die fühlbare Wärme sowohl des Rohgases hinter dem Kohlevergaser als auch die Abgase der Gasturbine in diesem kombinierten Gas- und Dampfturbinenkraftwerk noch besser auszunützen und dabei zugleich eine möglichst weitgehende Regelbarkeit des Gas- und Dampfturbinenkraftwerks zu ermöglichen.

Diese Aufgabe wird durch die Merkmale des Anspruchs gelöst.

Der allen anderen Heizflächen der Abhitzedampferzeugeranlage nachgeschaltete Niederdruckdampferzeuger ermöglicht es, infolge seiner Speisung mit gegenüber dem Hochdruckheizflächen vermindertem Druck auch noch mit den in diesem Bereich des Abhitzedampferzeugers weitgehend abgekühlten Abgasen der Gasturbine noch Niederdruckdampf zu erzeugen. Dieser kann in einem entsprechend dimensionierten Niederdruckteil der Dampfturbine zusätzlich zu dem teilentspannten Hochdruckdampf weitere Arbeit leisten.

Dadurch, daß diese Niederdruckheizfläche der Abhitzedampferzeugeranlage wasserseitig parallel dem Niederdruckdampferzeuger der dem Kohlevergaser nachgeschalteten Wärmetauscheranlage geschaltet ist, kann die Niederdruckdampferzeugung auch dann aufrechterhalten werden, wenn die Gasturbine wegen momentaner nachlassender Nachfrage nach elektrischer Energie vorübergehend abgeschaltet wird. Hierdurch wird die Anpassung der Leistung des Gesamtkraftwerks an den jeweiligen Strombedarf sowohl hinsichtlich des Ausmaßes der Leistungszurücknahme als auch hinsichtlich der Schnelligkeit der Anpassung deutlich erweitert.

Die Menge des zusätzlich verfügbaren Niederdruckdampfes läßt sich beträchtlich steigern, wenn in zweckmäßiger Ausgestaltung der Erfindung diese Heizfläche parallel zu dem Niederdruckdampferzeuger der dem Kohlevergaser nachgeschalteten Wärmetauscheranlage geschaltet ist. Außer der Vergrößerung der Niederdruckdampfmenge wird so auch eine beträchtliche Verminderung der Investitionskosten erreicht, weil jetzt alle Rohrleitungen und Niederdruckbauelemente für beide Niederdruckdampferzeugeranschlüsse gemeinsam verwendet werden können.

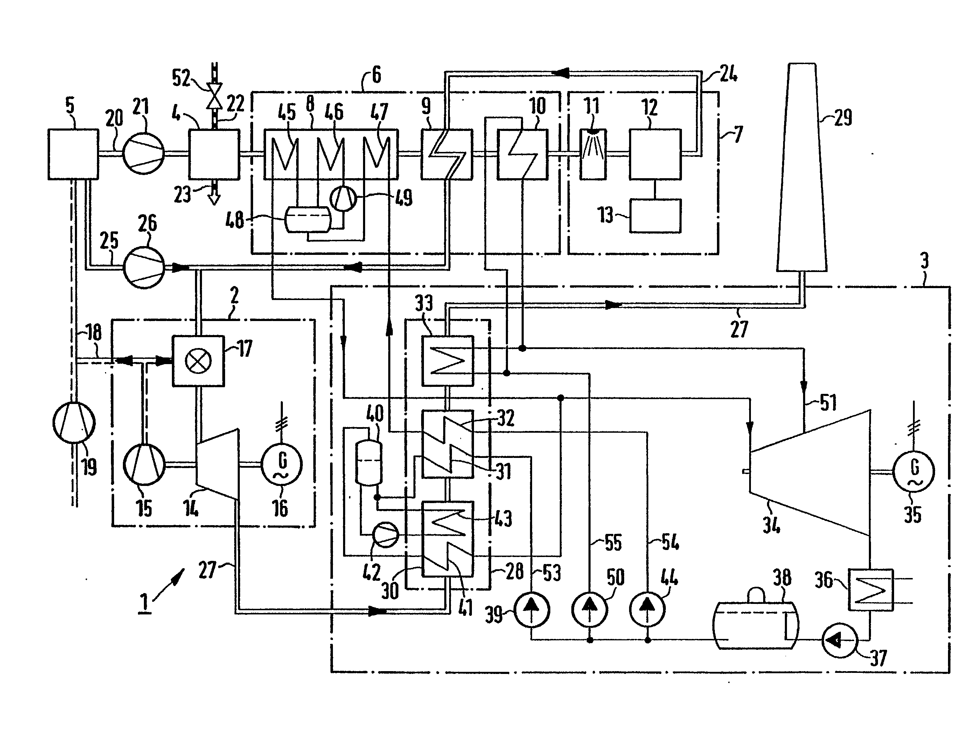

Weitere Einzelheiten der Erfindung werden anhand eines in der Figur dargestellten Ausführungsbeispiels erläutert. Es zeigt:

Die Figur eine schematische Anordnung der einzelnen Wärmetauscherheizflächen und ihre gegenseitige Verknüpfung im erfindungsgemäßen kombinierten Gas- und Dampfturbinenkraftwerk.

In der Figur sind die einzelnen Bauelemente des kombinierten Gas- und Dampfturbinenkraftwerks 1 in ihrer gegenseitigen Verknüpfung dargestellt. So besteht das kombinierte Gas- und Dampfturbinenkraftwerk im wesentlichen aus einem Gasturbinenkraftwerksteil 2 und einem Dampfturbinenkraftwerksteil 3, einen dem Gasturbinenkraftwerksteil 2 vorgeschalteten Kohlevergaser 4 mit einer dem Kohlevergaser vorgeschalteten Luftzerlegungsanlage 5, einer dem Kohlevergaser 4 rohgasseitig nachgeschalteten Wärmetauscheranlage 6 und einer der Wärmetauscheranlage 6 nachgeschalteten Gasreinigungsanlage 7. Die Wärmetauscheranlage 6 umfaßt einen Hochdruckdampferzeuger 8, einen Rohgas-Reingas-Wärmetauscher 9 und einen Niederdruckdampferzeuger 10. Die an die Wärmetauscheranlage angeschlossene Gasreinigungsanlage 7 umfaßt im Ausführungsbeispiel einen Rohgaswäscher 11, eine Schwefel-Wasserstoff-Absorptionsanlage 12 und eine Schwefel-Gewinnungsanlage 13. Der Gasturbinenkraftwerksteil 2 beinhaltet eine Gasturbine 14, sowie je einen von der Gasturbine angetriebenen Luftverdichter 15 und Generator 16. An den Luftverdichter 15 ist eine sowohl zur Brennkammer 17 der Gasturbine als auch zur Luftzerlegungsanlage 5 führende Frischluftleitung 18 angeschlossen. An der zur Luftzerlegungsanlage 5 führenden Frischluftleitung 18 ist außerdem ein weiterer, bedarfsweise zuschaltbarer, separat antreibbarer Luftverdichter 19 angeschlossen. Die die Luftzerlegungsanlage 5 verlassende Sauerstoffleitung 20 ist über einen Sauerstoffverdichter 21 an den Kohlevergaser 4 angeschlossen. Dessen Kohleeintragsleitung 22 und die Ascheaustragsleitung 23 sind angedeutet. Die die Gasreinigungsanlage 7 verlassende Reingasleitung 24 ist über den Rohgas-Reingas-Wärmetauscher 9 der Wärmetauscheranlage 6 geführt und an die Brennkammer 17 der Gasturbine 14 angeschlossen. Die die Luftzerlegungsanlage 5 verlassende Stickstoffleitung 25 ist über einen Stickstoffverdichter 26 ebenfalls an die Brennkammer der Gasturbine 14 angeschlossen.

Die Abgasleitung 27 der Gasturbine 14 führt durch eine Abhitzedampferzeugeranlage 28 und mündet anschließend in einen Kamin 29. Die Abhitzedampferzeugeranlage 28 umfaßt in Strömungsrichtung des Abgases nacheinander einen Hochdruckdampferzeuger 30, zwei Speisewasserheizflächen 31, 32 und einen Niederdruckdampferzeuger 33.

Die Dampfturbine 34 des Dampfturbinenkraftwerksteils 3 ist mit einem Generator 35 gekuppelt und abdampfseitig an einen Kondensator 36 angeschlossen. Der Kondensator 36 wird über eine Kondensatpumpe 37 in einen Speisewasserbehälter 38 entleert. Ein erster, an den Speisewasserbehälter 38 angeschlossener mit einer Speisewasserpumpe 39 versehener Strang 53 der Speisewasserleitung ist über die dem Hochdruckdampferzeuger 30 der Abhitzedampferzeugeranlage 28 nachgeschaltete Speisewasserheizfläche 31 an ein Wasserdampftrenngefäß 40 angeschlossen. Dieses Wasserdampftrenngefäß 40 ist dampfseitig an eine Überhitzerheizfläche 41 des Hochdruckdampferzeugers 30 der Abhitzedampferzeugeranlage 28 angeschlossen. Diese Überhitzerheizfläche ist mit der Hochdruckseite der Dampfturbine 34 verbunden. Das Wasserdampftrenngefäß 40 ist wasserseitig über eine separate Förderpumpe 42 mit einer der Überhitzerheizflächen 41 gasseitig nachgeordneten Hochdruckdampferzeugerheizfläche 43 verbunden. Letztere ist ausgangsseitig an das Wasserdampftrenngefäß 40 angeschlossen.

Ein zweiter, an den Speisewasserbehälter 38 angeschlossener und mit einer Speisewasserpumpe 44 versehener Strang 54 der Speisewasserleitung ist an die Speisewasserheizfläche 32 der Abhitzedampferzeugeranlage 28, die der vorgenannten Speisewasserheizfläche 31 gasseitig nachgeschaltet ist, angeschlossen. Diese letztgenannte Speisewasserheizfläche 32 ist an den Hochdruckdampferzeuger 8 der dem Kohlevergaser 4 nachgeschalteten Wärmetauscheranlage 6 angeschlossen. Dieser Hochdruckdampferzeuger 8 ist im Ausführungsbeispiel der Figur mit drei Heizflächen ausgestattet, von denen die dem Kohlevergaser 4 zugewandte Heizfläche als Überhitzerheizfläche 45 und die beiden anderen Heizflächen als erste und zweite Verdampferheizflächen 46, 47 ausgebildet sind. Die vom Kohlevergaser 4 abgewandte zweite Verdampferheizfläche 47 ist eingangsseitig an die letztgenannte Speisewasserheizfläche 32 der Abhitzedampferzeugeranlage 28 und ausgangsseitig an ein Wasserdampftrenngefäß 48 angeschlossen. Dieses Wasserdampftrenngefäß ist wasserseitig über eine Förderpumpe 49 an die erste Verdampferheizfläche 46 des Hochdruckdampferzeugers 8, der ausgangsseitig wieder in das Wasser-Dampf-Trenngefäß 48 mündet, angeschlossen.

Dampfseitig ist das Wasserdampftrenngefäß 40 an die Überhitzerheizfläche 45 des Hochdruckdampferzeugers 8 angeschlossen. Diese Überhitzerheizfläche ist ausgangsseitig ebenfalls mit der Hochdruckseite der Dampfturbine 34 verbunden.

Ein dritter, mit einer Speisewasserpumpe 50 versehener Strang 55 der Speisewasserleitung ist an den allen anderen Heizflächen der Abhitzedampferzeugeranlage 28 nachgeschalteten Niederdruckdampferzeuger 33 und den hierzu parallel geschalteten, allen übrigen Heizflächen der Wärmetauscheranlage 6 nachgeschalteten Niederdruckdampferzeuger 10 angeschlossen. Ausgangsseitig sind diese beiden Niederdruckdampferzeuger an eine Mitteleinspeisung 51 der Dampfturbine 34 angeschlossen.

Beim Betrieb dieses kombinierten Gas- und Dampfturbinenkraftwerks 1 wird durch den auf der Welle der Gasturbine 14 sitzenden Luftverdichter 15 Luft sowohl in die Brennkammer 17 als auch in die Luftleitung 18 der Luftzerlegungsanlage 5 gefördert. Über den in der Sauerstoffleitung 20 der Luftzerlegungsanlage 5 angeschlossenen Sauerstoffverdichter 21 gelangt Sauerstoff in den aufgeladenen Kohlevergaser 4. Über die mittels einer gasdichten Schleuse 52 verschließbare Kohleeintragsleitung 22 wird feingemahlene Kohle in den Kohlevergaser 4 gefördert. Das im Kohlevergaser erzeugte Rohgas strömt in der Wärmetauscheranlage 6 zunächst durch die Heizflächen des Hochdruckdampferzeugers 8 und hier wiederum zuerst durch die Überhitzerheizfläche 45 und dann durch die ersten und zweiten Verdampferheizflächen 46 und 47. Danach strömt es in den Rohgas-Reingaswärmetauscher 9 und in den Niederdruckdampferzeuger 10. Das auf etwa 100° abgekühlte Rohgas wird der Gasreinigungsanlage 7 über einen Rohgaswäscher 11 in einer Schwefel-Wasserstoffabsorptionsanlage 12 zugeführt. Die ausgewaschenen Schwefelverbindungen werden in der der Schwefelwasserstoffabsorptionsanlage nachgeschalteten Schwefelgewinnungsanlage 13 zu reinem Schwefel reduziert. Das die Schwefel-Wasserstoffabsorptionsanlage 12 verlassende Reingas wird im Rohgas-Reingas-Wärmetauscher 9 wieder aufgewärmt und zusammen mit dem aus der Luftzerlegungsanlage 5 zuströmenden Stickstoff der Brennkammer 17 der Gasturbine 14 zugeleitet. Dabei ist in der Stickstoffleitung 25 zur Überbrückung der Druckdifferenz ein weiterer Stickstoffverdichter 26 eingebaut.

Das die Gasturbine 14 verlassende Abgas strömt über die Abgasleitung 27 in die Abhitzedampferzeugeranlage 28 und dort zunächst über die Überhitzerheizflächen 41 zu der Verdampferheizfläche 43 des Hochdruckdampferzeugers 30. Sodann strömt es durch die Speisewasserheizflächen 31, 32 und den Niederdruckdampferzeuger 33. Das nunmehr auf ca. 120° abgekühlte Abgas wird in den Kamin 29 entlassen.

Durch diese nachgeschaltete zusätzliche Heizfläche 33 wird nicht nur die Wärme der in diesem Bereich der Abhitzedampferzeugeranlage 28 bereits weitgehend abgekühlten Abgase der Gasturbine noch zur Erzeugung zumindet von Niederdruckdampf herangezogen, sondern wird diese Niederdruckdampfmenge auch zusätzlich infolge Parallelschaltung zum Niederdruckdampferzeuger der dem Kohlevergaser 4 nachgeschalteten Wärmetauscheranlage 6 ohne nennenswerten zusätzlichen konstruktiven Aufwand infolge Verwendung des gleichen Niederdruckleitungssystems der gleichen Niederdruckspeisewasserpumpe 50 und der gleichen Mitteneinspeisung 51 in den gemeinsamen Niederdruckteil der Dampfturbine 34 eingespeist.

Bezugszeichenliste

Gas- und Dampfturbinenkraftwerk 1
Gasturbinenkraftwerksteil 2
Dampfturbinenkraftwerksteil 3
Kohlevergaser 4
Luftzerlegungsanlage 5
Wärmetauscheranlage 6
Gasreinigungsanlage 7
Hochdruckdampferzeuger 8
Rohgas-Reingas-Wärmetauscher 9
Niederdruckdampferzeuger 10
Rohgaswäscher 11
Schwefelwasserstoffabsorptionsanlage 12
Schwefelgewinnungsanlage 13
Gasturbine 14
Luftverdichter 15
Generator 16
Brennkammer 17
Luftleitung 18
Luftverdichter 19
Sauerstoffleitung 20
Sauerstoffverdichter 21
Kohleeintragsleitung 22
Ascheaustragsleitung 23
Reingasleitung 24
Stickstoffleitung 25
Stickstoffverdichter 26
Abgasleitung 27
Abhitzedampferzeugeranlage 28
Kamin 29
Hochdruckdampferzeuger 30
Hochdruck-Speisewasserheizfläche 31, 32
Niederdruckdampferzeuger 33
Dampfturbine 34
Generator 35
Kondensator 36
Kondensatpumpe 37
Speisewasserbehälter 38
erste Speisewasserpumpe 39
Wasserdampftrenngefäß 40
Überhitzerheizfläche 41
Förderpumpe 42
Hochdruckdampferzeugerheizfläche 43
zweite Speisewasserpumpe 44
Überhitzerheizfläche 45
erste Verdampferheizfläche 46
zweite Verdampferheizfläche 47
Wasserdampftrenngefäß 48
Förderpumpe 49
Speisewasserpumpe 50
Mitteleinspeisung 51
Schleuse 52
Strang 53, 54, 55

**Patentansprüche**

Kombiniertes Gas- und Dampfturbinenkraftwerk mit einem dem Gasturbinenteil vorgeschalteten Kohlevergaser, mit einer dem Kohlevergaser rohgasseitig nachgeschalteten Wärmetauscheranlage, mit einem Hochdruckdampferzeuger, einem Rohgas-Reingas-Wärmetauscher und einem Niederdruckdampferzeuger, mit einer der Wärmetauscheranlage nachgeschalteten Gasreinigungsanlage, mit einer von der Gasreinigungsanlage zur Brennkammer der Gasturbine führenden Reingasleitung, mit einer vom Abgasstrom der Gasturbine durchströmten Abhitzedampferzeugeranlage, mit einem Hochdruckdampferzeuger und mit einem an der Abhitzedampferzeugeranlage angeschlossenen Dampfturbinenkraftwerksteil, dadurch gekennzeichnet, daß die Abhitzedampferzeugeranlage einen Niederdruckdampferzeuger aufweist, dessen Heizfläche (33) rauchgasseitig allen anderen, den Hochdruckdampferzeuger und dessen Speisewassererhitzer bildenden Heizflächen (31, 32, 41, 43) der Abhitzedampferzeugeranlage (28) nachgeschaltet ist und eingangsseitig an einen Strang der Speisewasserleitung und ausgangsseitig an eine Niederdruckdampfeinspeisung (51) der Dampfturbine (34) angeschlossen ist, wobei die Niederdruckdampferzeugerheizfläche (33) wasserseitig parallel zu dem Niederdruckdampferzeuger (10) der dem Kohlevergaser (4) nachgeschalteten Wärmetauscheranlage (6) geschaltet ist.

**Claims**

Combined gas and steam turbine power plant, with a coal gasifier connected upstream of the gas turbine section, with a heat exchanger plant connected, considering the raw gas, downstream of the coal gasifier and having a high-pressure steam generator, a raw gas/purified gas heat exchanger and a low-pressure steam generator, with a gas purification plant connected downstream of the heat exchanger plant, with a purified gas conduit leading from the gas purification plant to the combustion chamber of the gas turbine, with a waste-heat steam generator plant through which the gas turbine exhaust gas flow passes and which has a high-pressure steam generator and with a steam turbine power plant section connected to the waste-heat steam generator plant, characterised in that the waste-heat steam generator plant has a low-pressure steam generator the heating surface (33) of which is connected, considering the exhaust gas, downstream of all the other heating surfaces (31, 32, 41, 43), which form the high-pressure steam generator (30) and its feed water heater, of the waste-heat steam generator plant (28) and is connected at the input side to a run of the feed water conduit and at the output side to a low-pressure steam feed (51) of the steam turbine (34), the low-pressure steam generator heating surface (33) being connected, considering the water, in parallel with the low-pressure steam generator (10) of the heat exchanger plant (6) connected downstream of the coal gasifier (4).

**Revendications**

Centrale thermique à cycle combiné de turbine à gaz et à vapeur, comportant un gazéificateur de charbon monté en amont de la partie à turbine à gaz, une installation à échangeur de chaleur montée en aval du côté du gazéificateur de charbon, un générateur de vapeur haute pression, un échangeur de chaleur gaz brut – gaz purifié et un générateur de vapeur basse pression, une installation de purification du gaz, montée en aval de l'installation à échangeur de chaleur, une conduite pour le gaz purifié menant de l'installation de purification du gaz vers la chambre de combustion de la turbine à gaz, une installation à générateur de vapeur par la chaleur perdue, traversée par le courant gazeux provenant de la turbine à gaz, avec un générateur de vapeur haute pression et avec une partie de centrale à turbine à vapeur, reliée à l'installation à générateur de vapeur par la chaleur perdue, caractérisée par le fait que l'installation à générateur de vapeur par la chaleur perdue comporte un générateur de vapeur basse pression dont la surface de chauffe (33) est disposée, côté fumées, en aval de toutes les autres surfaces de chauffage (31, 32, 41, 43) de l'installation à générateur de vapeur par la chaleur perdu, qui forment le générateur de vapeur haute pression et son réchauffeur de l'eau d'alimentation, et est reliée, côté entrée, à une branche de la conduite d'eau d'alimentation, et côté sortie à une alimentation en vapeur basse pression (51) de la turbine à vapeur (34), la surface de chauffe du générateur de vapeur basse pression (33) étant montée, côté eau, en parallèle sur le générateur de vapeur basse pression (10) de l'installation à échangeur de chaleur (6), montée en aval du gazéificateur de charbon (4).

EP 0 209 044 B1